# EUROPÄISCHE PATENTSCHRIFT

(11) **EP 1 384 923 B1**
(45) Veröffentlichungstag und Bekanntmachung des Hinweises auf die Patenterteilung: **10.08.2005**
(21) Anmeldenummer: 03008418.0
(22) Anmeldetag: 11.04.2003
(51) Int. Cl.: F16J 15/32, F16D 3/06

(54) **Dichtring zur Abdichtung eines Längenausgleichs einer Gelenkwelle**
Sealing ring for sealing a length compensation of a universal joint shaft
Joint d'étanchéité oour un dispositif de rattrapage de jeu axial d'un arbre articulé

(30) Priorität: 26.07.2002 DE 10234305
(43) Veröffentlichungstag der Anmeldung: 28.01.2004
(73) Patentinhaber: Spicer Gelenkwellenbau GmbH & Co. KG, 45143 Essen (DE)
(72) Erfinder: Schultze, Hans-Jürgen, 46240 Bottrop (DE)
(74) Vertreter: Harwardt, Günther, Dipl.-Ing.

(56) Entgegenhaltungen:
- EP-A- 0 229 906
- DE-A- 1 943 086
- DE-A- 2 113 557
- DE-A- 3 418 898
- DE-A- 3 619 305
- DE-A- 3 937 896
- DE-A- 4 018 796
- DE-A- 19 839 502
- DE-A- 19 936 462
- DE-C- 3 545 683

## Beschreibung

Die Erfindung betrifft einen Dichtring zur Abdichtung des Spaltes zwischen einer eine kreiszylindrische Außenfläche aufweisenden, innenprofilierten Nabenhülse eines Längenausgleichs einer Gelenkwelle und einer die Nabenhülse außen überdeckenden rohrförmigen Dichthülse, die den Dichtring hält.

Die DE 23 08 820 C3 betrifft einen axial beweglichen Dichtring für den Längenausgleich einer Gelenkwelle. Der Dichtring umfasst einen Grundkörper und daran angebracht drei nach innen schräg auf die Längsachse zu verlaufende Schenkel, die gleich gerichtet sind und in Richtung der Längsachse versetzt am Grundkörper ansetzen. Diese Schenkel weisen an ihren freien Enden Dichtkonturen in Form von Ringkanten auf. Von den Schenkeln dient der äußere mit seiner Dichtkontur als Abstreifer. Die dahinter liegenden Schenkel dienen zur Erzielung einer möglichst dichten Verbindung. Dem den Abstreifer bildenden Schenkel entfernt ist dem Grundkörper ein blockförmiger Ringabschnitt angeformt, der zur Abstützung auf der Außenfläche der Nabenhülse der Gelenkwelle dient. Die Form der Schenkel und insbesondere die Ausbildung nur einer Ringkante an ihren freien Enden führt zu einer Dichtlippengestaltung, die eine nur geringe Stabilität aufweist, so dass das Eindringen von Wasser und Schmutz leichter möglich ist. Das Dokument DE-A-229 906 offenbart ebenfalls eine gathungskonforme Dichtung.

Der Erfindung liegt die Aufgabe zugrunde, einen Dichtring vorzusehen, der eine verbesserte Abdichtung gegen das Eindringen von Schmutz und Wasser in und das Austreten von Fett aus dem Längenausgleich bewirkt.

Gelöst wird diese Aufgabe durch einen Dichtring zur Abdichtung des Spaltes zwischen einer eine kreiszylindrische Außenfläche aufweisenden, innenprofilierten Nabenhülse eines Längenausgleichs einer Gelenkwelle und einer die Nabenhülse außen überdeckenden rohrförmigen Dichthülse, die den Dichtring hält,
gekennzeichnet durch
- einen ringförmigen Grundkörper aus einem elastisch verformbaren Gummiwerkstoff und/oder Kunststoff, dem Mittel zum Festlegen an der Dichthülse zugeordnet sind und der eine Längsachse sowie eine Innenkontur aufweist,
- einen - im Längsschnitt gesehen - ersten Schenkel, der im entspannten Zustand zur Längsachse, ausgehend von einem mit dem Grundkörper verbundenen Ende, geneigt zu einem freien Ende verläuft und im Bereich des freien Endes radial innen zur Längsachse hin eine erste Dichtkontur und dazu axial vom freien Ende weg mindestens eine weitere Dichtkontur aufweist, wobei die Dichtkonturen zur Anlage an der Außenfläche der Nabenhülse bestimmt sind,
- einen - im Längsschnitt gesehen - zweiten Schenkel, der axial entlang der Längsachse zum ersten Schenkel versetzt am Grundkörper mit seinem verbundenen Ende ansetzt und mit der gleichen Richtung geneigt verläuft wie der erste Schenkel und mit einem freien Ende endet, wobei der zweite Schenkel im Bereich seines freien Endes radial innen zur Längsachse hin ebenfalls wie der erste Schenkel eine erste Dichtkontur und jeweils axial entlang der Längsachse zu seinem verbundenen Ende versetzt mindestens eine weitere Dichtkontur aufweist, wobei diese Dichtkonturen zur Anlage an der Außenfläche der Nabenhülse bestimmt sind.

Der Vorteil bei dieser Lösung ist, dass die Anzahl der mit der Außenfläche der Nabenhülse in Kontakt tretenden Dichtkonturen erhöht ist und die Schenkel deutlich steifer ausgebildet werden können, da die Anpresskraft auf eine größere Anzahl von Dichtkonturen verteilt wird.

Insbesondere durch die Verdickung der Schenkel im Bereich der innen liegenden Dichtkonturen wird das Entweichen von Fett wirksamer verhindert. Dies bedeutet, dass eine längere Fettbevorratung im Längenausgleich gegeben ist. Dies bedeutet auch, dass weniger Fett austreten kann, so dass also auch die Umweltbelastung reduziert ist. Die Ausbildung gewährleistet auch, dass beim Einsatz der Gelenkwelle beispielsweise in einem im Gelände eingesetzten Nutzkraftwagen oder bei Erdbewegungsmaschinen das Eindringen von Schmutz und Wasser wirksam verhindert ist. Gleichzeitig bleibt jedoch auch die Abschmierbarkeit erhalten. Für das Abschmieren ist gegenüber der herkömmlichen Ausführung lediglich ein höherer Abschmierdruck erforderlich. Dies bringt jedoch den Vorteil mit sich, dass durch das im Verhältnis zum Stand der Technik spätere Öffnen der Dichtkonturen Fett weiter in das Profil des Längenausgleichs gedrückt wird und so die Schmierung desselben und damit dessen Lebensdauer verbessert wird.

Vorzugsweise ist vorgesehen, dass die Länge des ersten Schenkels von dem mit dem Grundkörper verbundenen Ende bis zum freien Ende größer bemessen ist, als die des zweiten Schenkels von seinem mit dem Grundkörper verbundenen Ende bis zu seinem freien Ende. Hierdurch wird erreicht, dass über einen größeren Toleranzbereich bezüglich des Durchmessers der Außenfläche der Nabenhülse eine dichtende Anlage erzielt wird.

Vorgeschlagen ist ferner, dass der erste Schenkel und/oder zweite Schenkel ausgehend jeweils vom freien Ende zum verbundenen Ende an einer Verdickung die weitere(-n) Dichtkontur(-en) tragen. Hierdurch wird eine Verstärkung erreicht, die ebenfalls zu verbesserten Anlageverhältnissen führt. Um möglichst einen großen Toleranzbereich hinsichtlich des Durchmessers abdecken zu können und dabei eine günstige Abdichtung zu erzielen, ist ferner vorgesehen, dass zwischen den Dichtkonturen eine jeweils von der Längsachse weggerichtete ringförmige Vertiefung angeordnet ist. Aus den Toleranzverhältnissen hinsichtlich des Durchmessers der Außenfläche der Nabenhülse verbleiben zwei oder mehr voneinander durch die Vertiefung beabstandete Dichtkonturen oder aber im Extremfall eine flächige Anlage.

Die Dichtkonturen können verschiedene Formen annehmen. So ist es möglich, mindestens eine der Dichtkonturen im entspannten Zustand als Ringkante zu gestalten. Es ist auch möglich, mindestens eine der Dichtkonturen im entspannten Zustand als in der Länge begrenzte Ringfläche auszubilden. Auch ist es möglich mindestens eine der Dichtkonturen im entspannten Zustand, im Längsschnitt gesehen, abgerundet auszubilden.

Um das Befestigen des Dichtringes in der Dichthülse ohne Einfluss auf die Dichtfunktion der Dichtkonturen zu lassen, so dass also Werkstoffe gewählt werden, die eine gute Dichteigenschaft aufweisen, ist der Grundkörper mit einem Verstärkungsring aus einem Material versehen, das vom Material des Grundkörpers abweicht. Der Verstärkungsring ist mit dem Grundkörper unlösbar verbunden und ist vorzugsweise zumindest teilweise in diesen eingebettet und aus Metall hergestellt. Hierdurch ist es möglich, eine genügend große Einpresskraft und damit sicheren Sitz des Dichtringes in der Dichthülse zu gewährleisten und andererseits aber auch die gewünschten Verhältnisse bezüglich der Abdichtung gegenüber der Außenfläche der Nabenhülse zu erzielen. Diese Dichtfunktion soll von den Einspannkräften des Dichtringes in der Dichthülse unbeeinflusst bleiben.

In der Zeichnung sind eine Gelenkwelle und verschiedene Ausführungsformen für den erfindungsgemäßen Dichtring dargestellt.

Es zeigt
- Figur 1: eine Gelenkwelle, halb in Ansicht und halb im Längsschnitt,
- Figur 2: einen Halblängsschnitt einer ersten Ausführungsform eines Dichtringes gemäß der Erfindung, wobei die Dichtkonturen und die diese tragenden Schenkel im entspannten Zustand dargestellt sind,
- Figur 3: die Ausführungsform gemäß Figur 2 in Anwendung auf eine Nabenhülse mit einer Außenfläche, die mit ihrem Durchmesser im unteren Toleranzbereich liegt,
- Figur 4: die Zuordnung des Dichtringes gemäß Figur 2 zu einer Nabenhülse mit einer Außenfläche, deren Durchmesser dem Höchstmaß des vorgesehenen Toleranzbereiches entspricht,
- Figur 5: einen Halblängsschnitt einer zweiten Ausführungsform eines Dichtringes gemäß der Erfindung mit mehreren Dichtkonturen je Schenkel,
- Figur 6: eine dritte Ausführungsform eines erfindungsgemäßen Dichtungsringes im Halblängsschnitt, und
- Figur 7: eine vierte Ausführungsform eines erfindungsgemäßen Dichtringes im Halblängsschnitt.

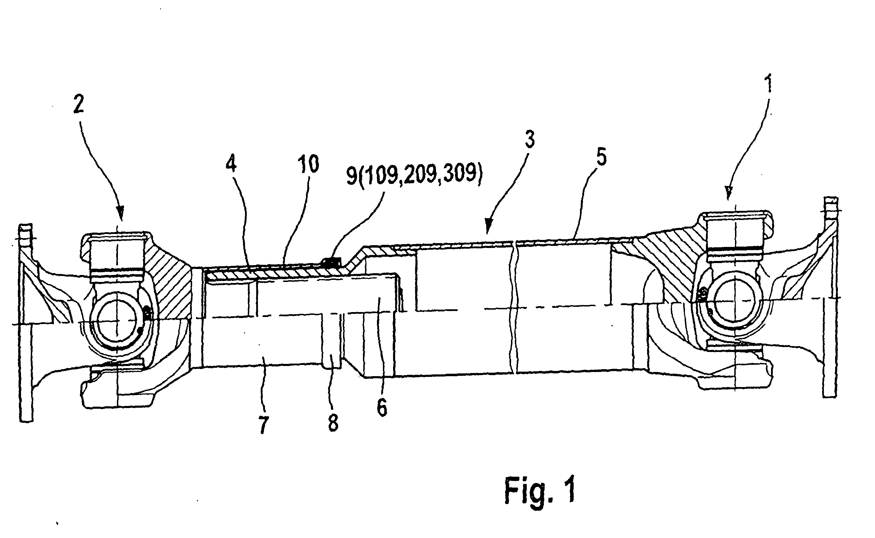

In Figur 1 ist eine Gelenkwelle halb in Ansicht und halb im Längsschnitt dargestellt.

Die Gelenkwelle umfasst ein erstes Kreuzgelenk 1 und ein zweites Kreuzgelenk 2 sowie einen beide verbindenden Längenausgleich 3 Der Längenausgleich 3 umfasst eine Nabenhülse 4, die über ein Rohr 5, das zur Längenanpassung der Gelenkwelle an unterschiedliche Einsatzfälle unterschiedlich lang ausgebildet sein kann, die Nabenhülse 4 mit dem Kreuzgelenk 1 verbindet. Die Nabenhülse 4 ist innen profiliert, d. h. sie weist parallel zur Längsachse verlaufende Zähne auf, die umfangsverteilt angeordnet sind. In der Nabenhülse 4 sitzt ein Zapfen 6 verschiebbar ein, der mit einer entsprechenden Verzahnung versehen ist, so dass ein Drehmoment zwischen beiden übertragen werden kann. Der Zapfen 6 ist mit dem zweiten Kreuzgelenk 2 fest verbunden. Die Gleitbewegung tritt beim Betrieb der Gelenkwelle ein, wenn die Kreuzgelenke 1, 2 nicht die gestreckte Lage einnehmen, sondern unter einem Beugewinkel arbeiten und erfordert ein Schmieren der Verzahnungen von Zapfen 6 und Nabenhülse 4. Um zu verhindern, dass dieses Schmierfett austritt oder von außen Feuchtigkeit oder Schmutz in diesen Bereich eintritt, ist eine Dichthülse 7 vorgesehen, die mit einem Ende fest und dicht mit dem zweiten Kreuzgelenk 2 verbunden ist und die an ihrem anderen Ende einen im Durchmesser vergrößerten Aufnahmeabschnitt 8 aufweist, der zur Aufnahme eines Dichtringes 9, 109, 209, oder 309 dient. Dieser dient zur Abdichtung gegenüber der Außenfläche 10 der Nabenhülse 4. Er bewegt sich bei Längenänderungen axial auf der Außenfläche 10.

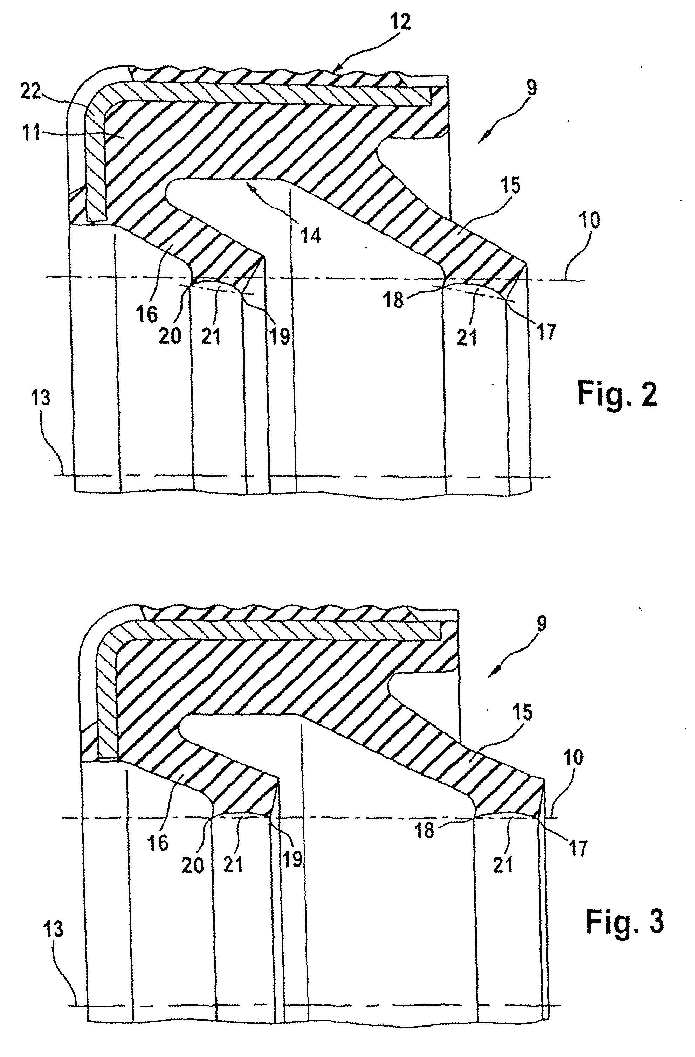

Die Figuren 2, 3 und 4 zeigen eine erste Ausführungsform eines Dichtringes 9 im Halblängsschnitt. Der Dichtring 9 umfasst einen Grundkörper 11 aus einem Gummiwerkstoff oder aus einem Kunststoff oder aus einem kombinierten Werkstoff. Dem Grundkörper 11 ist an der Außenseite 12 eine gewellte Kontur angeformt, mit der der Dichtring 9 beispielsweise in dem Aufnahmeabschnitt der Dichthülse gemäß Figur 1 aufgenommen wird. Ferner ist dem Grundkörper 11 ausgehend von der Innenkontur 14 schräg in Richtung auf die Längsachse 13 vorstehend ein erster Schenkel 15 angeformt, der sich um die Längsachse 13 herum als konischer Abschnitt erstreckt. Bezogen auf die Längsachse 13 setzt im axialen Abstand zu dem ersten Schenkel 15 an die Innenkontur 14 des Grundkörpers 11 ein zweiter Schenkel 16 an, der in etwa gleich gerichtet wie der erste Schenkel 15 auf die Längsachse 13 zu verläuft. Der erste Schenkel 15 besitzt an seinem mit dem Grundkörper 11 verbundenen Ende entfernten freien Ende eine erste Dichtkontur 17 in Form einer Ringkante und dazu in Richtung zum zweiten Schenkel 16 versetzt eine weitere Dichtkontur 18 in Form einer Ringkante, wobei in dem gezeichneten entspannten Zustand zwischen der ersten Dichtkontur 17 und der weiteren Dichtkontur 18 eine Vertiefung 19 vorhanden ist. Entsprechend weist auch der zweite Schenkel 16 an seinem freien Ende in Richtung zum ersten Schenkel 15 eine erste Dichtkontur 19 auf, an die sich axial beabstandet vom ersten Schenkel 15 weg eine weitere Dichtkontur 20 in Form einer Ringkante anschließt. Zwischen den beiden als Ringkanten gestalteten Dichtkonturen 19, 20 ist eine Vertiefung 21 vorhanden. Auch der zweite Schenkel 16 bildet einen konischen Körper. In Figur 2 ist auch die Lage der Außenfläche 10 der Dichthülse in Bezug auf die Längsachse 13 eingezeichnet, um darzustellen, inwieweit eine Aufweitung im Bereich der Dichtkonturen 17, 18, 19, 20 erfolgen muss, damit diese auf der Außenfläche 10 der Nabenhülse zu liegen kommen. Hierdurch wird die entsprechende Vorspannung bestimmt. Ferner ist erkennbar, dass die weiteren Dichtkonturen 18 bzw. 20 der beiden Schenkel 15, 16 Bestandteil von Verdickungen der Schenkel 15, 16 sind, so dass eine entsprechende Materialanhäufung gegeben ist, die für eine weniger nachgiebige Ausführung sorgt. Ferner ist aus den Figuren 2 bis 4 erkennbar, dass in dem Grundkörper 11 ein Verstärkungsring 22 aus einem Material angeordnet ist, der von dem des Grundkörpers 11 und dem der angeformten Schenkel 15, 16 abweicht. Vorzugsweise handelt es sich um einen Verstärkungsring 22 aus Metall. Dieser gewährleistet, dass der Dichtring 9 in dem Aufnahmeabschnitt der Dichthülse mit der nötigen Vorspannung aufgenommen wird, d. h. festsitzt, andererseits aber der Sitz der Dichtkonturen 17, 18 bzw. 19, 20 auf der Außenfläche hiervon unberührt bleibt.

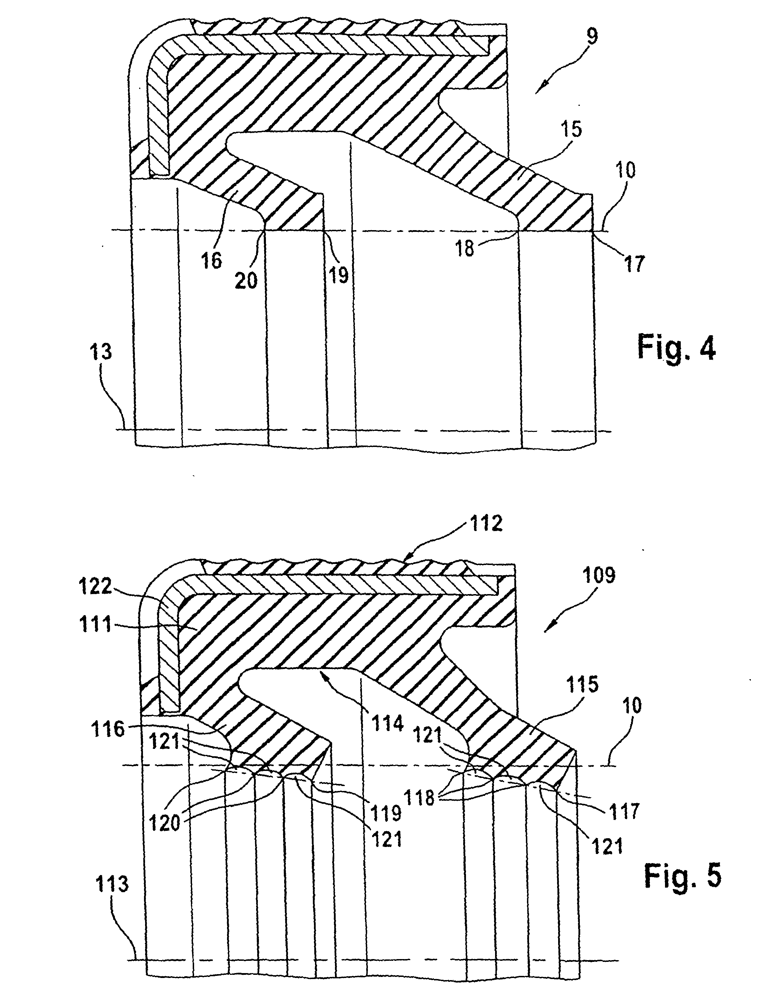

In Figur 3 ist der Dichtring 9 jeweils als Einzelteil im Halblängsschnitt dargestellt, wobei jedoch die Dichtkonturen 17, 18 bzw. 19, 20 so dargestellt sind, als wenn sie auf der Außenfläche 10 der Nabenhülse sitzen würden, wobei der Durchmesser der Au-Benfläche 10 innerhalb der vorgesehenen Toleranzen ein Minimum angenommen hat. Es sind noch deutlich die als Ringkanten ausgebildeten Dichtkonturen 17, 18 bzw. 19, 20 erkennbar, die also im linienförmigen Kontakt zur Außenfläche 10 stehen. In beiden Bereichen ist die Vertiefung 21 noch ausgeprägt zu erkennen. In Figur 4 ist ebenfalls ein Halblängsschnitt des Dichtringes 9 ersichtlich, wobei jedoch die Form erkenntlich ist, die sich im Bereich der Dichtkonturen 17, 18 und 19, 20 der beiden Schenkel 15, 16 ergibt, wenn die Dichtung auf einer Nabenhülse montiert ist, deren Außenfläche 10 im vorgesehenen Toleranzbereich den größten Durchmesser annimmt. Es ist erkennbar, dass die ansonsten als Ringkanten ausgebildeten Dichtkonturen 17, 18 bzw. 19, 20 aufgrund der Vorspannung so verformt sind, dass zwischen den Paaren von Dichtkonturen 17, 18 bzw. 19, 20 keine Vertiefung mehr gegeben ist. Es ist also ein Sitz mit der höchstmöglichen Vorspannung gegeben.

Figur 5 zeigt eine zweite Ausführungsform eines Dichtringes, der mit 109 bezeichnet ist. Sämtliche Bestandteile und Strukturen, die denen der Figur 2 entsprechen, sind mit Bezugsziffern versehen, die zu den vergleichbaren von Figur 2 um den Zahlenwert 100 erhöht sind. Zur Beschreibung wird auf die entsprechenden Positionen von Figur 2 bis 4 verwiesen. Nachfolgend werden nur die Unterschiede beschrieben.

Die Ausbildung des Grundkörpers 111 und der beiden Schenkel 115, 116 entspricht der des Grundkörpers 11 und der Schenkel 15, 16 der Figuren 2 bis 4. An den beiden Schenkeln 115, 116 ist jeweils eine erste Dichtkontur 117 bzw. 119 vorgesehen, die als Ringkante gestaltet ist. Es ist jedoch nicht nur eine weitere Dichtkontur im Abstand zur ersten Dichtkontur vorgesehen, sondern es sind insgesamt drei weitere Dichtkonturen 118 bzw. 120 vorgesehen die jeweils als Ringkanten ausgebildet sind und durch Vertiefungen 121 voneinander getrennt sind. Durch diese Ausbildung wird die dichtende Anlage erhöht. Die Verformungseigenschaften entsprechen im wesentlichen auch denen die in den Figuren 3 und 4 bezüglich der Ausführungsform gemäß Figur 2 dargestellt sind. Die Anzahl der Dichtkonturen kann nach den Bedürfnissen festgelegt werden.

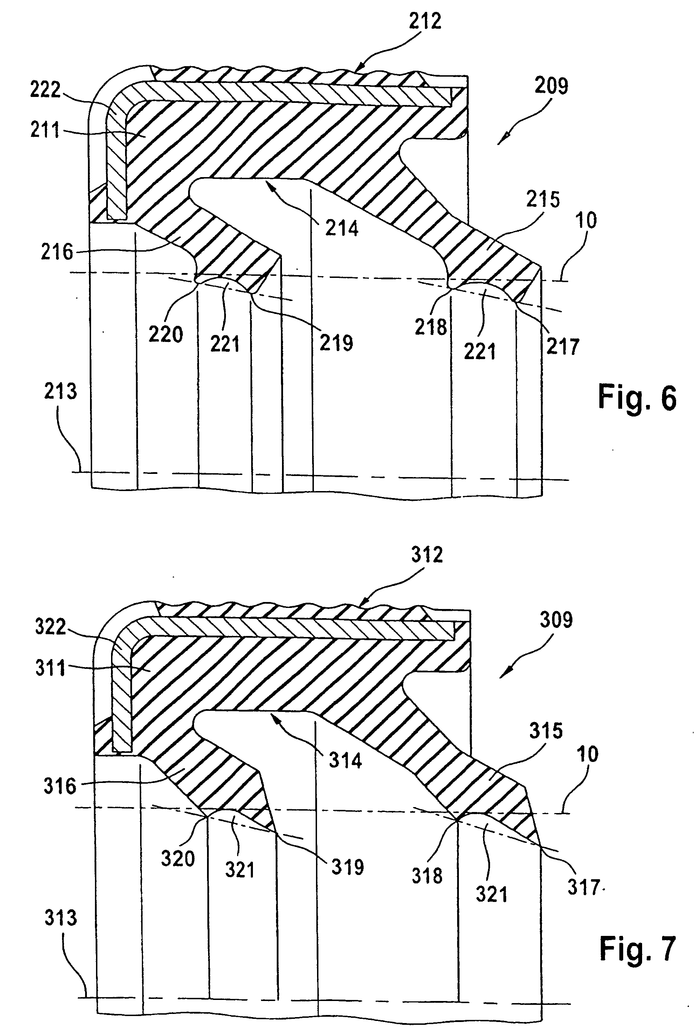

Die Figur 6 zeigt eine dritte Ausführungsform eines Dichtrings 209 im Halblängsschnitt. Hier sind die Bestandteile und Strukturen, die im Zusammenhang mit den Figuren 2 bis 4 bereits für die erste Ausführungsform erläutert wurden, mit Positionszeichen versehen, die gegenüber den Positionen in den Figuren 2 bis 4 um den Zahlenwert 200 erhöht sind. Zu deren Beschreibung wird auf die Beschreibung zu der Ausführungsform gemäß Figuren 2 bis 4 verwiesen. Nachfolgend werden die Unterschiede erläutert. Im Unterschied zur Ausführungsform gemäß Figuren 2 bis 4 sind die ersten Dichtkonturen 217 und 219 der beiden Schenkel 215, 216, die im Bereich des freien Endes der beiden Schenkel 215, 216 vorgesehen sind, nicht als Ringkanten ausgebildet, sondern mit einer axial kurzen Fläche oder einer Rundung versehen. Darüber hinaus weist der erste Schenkel 215 eine weitere Dichtkontur 218 auf, die ebenfalls axial versetzt zur ersten Dichtkontur 217 vorgesehen ist und von dieser durch eine im Verhältnis zur Figur 2 stärker ausgeprägte Vertiefung 212 getrennt ist. Darüber hinaus ist die zweite Dichtkontur 218 Teil einer stärkeren Verdickung des ersten Schenkels 215 und weist ferner eine axial kurze Fläche oder einen Radius auf. Die gleiche Ausbildung ist hinsichtlich der Dichtkonturen 219, 220 an dem zweiten Schenkel 216 vorgesehen.

Die Figur 7 zeigt einen Halblängsschnitt bezüglich eines Dichtringes 309, bei dem ebenfalls die Bestandteile und Strukturen, die denen der Ausführungsform gemäß der Figuren 2 bis 4 entsprechen, mit Positionszahlen versehen sind, die zu denen bei den Figuren 2 bis 4 um den Zahlwert 300 erhöht sind. Zu deren Beschreibung wird auf die bei den Figuren 2 bis 4 verwiesen. Nachfolgend werden jedoch die Unterschiede herausgestellt. Es ist erkennbar, dass das freie Ende des ersten Schenkels 315 und auch des zweiten Schenkels 316 spitz ausläuft, so dass sich eine erste Dichtkontur 317 bzw. 319 mit einer ausgeprägten Ringkante ergibt. Von diesen ist axial auf der Längsachse 313 versetzt jeweils eine weitere Dichtkontur 318 am ersten Schenkel 315 bzw. 320 am zweiten Schenkel 316 vorgesehen, die jeweils Bestandteil einer Verdickung sind, die nicht nur, wie bei der Ausführungsform gemäß Figur 6, eine lokale Verdickung ist, sondern eine breite Basis aufweist, die weit in Richtung zu dem mit dem Grundkörper 311 verbundenen Ende der beiden Schenkel 315 bzw. 316 führt. Dies ist insbesondere bei dem zweiten Schenkel 316 stark ausgeprägt. Hierdurch ergibt sich eine erhöhte Stabilität der mit der Außenfläche 10 in Kontakt tretenden Dichtkonturen. Ferner ergibt sich dadurch eine erhöhte Anpresskraft, was insbesondere bei hohen Drehzahlen positiv ist.

Bei den in den Figuren 2 bis 7 gezeigten Ausführungsformen stellt die Schnittfläche einen Teil eines Rotationskörpers um die jeweilige Längsachse dar.

### Bezugszeichenliste

- 1: erstes Kreuzgelenk
- 2: zweites Kreuzgelenk
- 3: Längenausgleich
- 4: Nabenhülse
- 5: Rohr
- 6: Zapfen
- 7: Dichthülse
- 8: Aufnahmeabschnitt
- 9, 109, 209, 309: Dichtring
- 10: Außenfläche der Nabenhülse
- 11, 111, 211, 311 1: Grundkörper
- 12, 112, 212, 312: Außenseite
- 13,113,213,313: Längsachse
- 14, 114, 214, 314: Innenkontur
- 15, 115, 215, 315: erster Schenkel
- 16, 116, 216, 316: zweiter Schenkel
- 17, 117, 217, 317: erste Dichtkontur des ersten Schenkels
- 18, 118, 218, 318: weitere Dichtkontur des ersten Schenkels
- 19, 119, 219, 319: erste Dichtkontur des zweiten Schenkels
- 20, 120, 220, 320: weitere Dichtkontur des zweiten Schenkels
- 21, 121, 221, 321: Vertiefung
- 22, 122, 222, 322: Verstärkungsring

## Patentansprüche

1. Dichtring (9, 109, 209, 309) zur Abdichtung des Spaltes zwischen einer eine kreiszylindrische Außenfläche (10) aufweisenden, innen profilierten Nabenhülse (4) eines Längenausgleichs (3) einer Gelenkwelle und einer die Nabenhülse (4) außen überdeckenden rohrförmigen Dichthülse (7), die den Dichtring (9, 109, 209, 309) hält,
**gekennzeichnet durch**
- einen ringförmigen Grundkörper (11, 111, 211, 311) aus einem elastisch verformbaren Gummiwerkstoff und/oder Kunststoff, dem Mittel zum Festlegen an der Dichthülse (7) zugeordnet sind und der eine Längsachse (13, 113, 213, 313) sowie eine Innenkontur (14, 114, 214, 314) aufweist,
- einen - im Längsschnitt gesehen - ersten Schenkel (15, 115, 215, 315), der im entspannten Zustand zur Längsachse (13, 113, 213, 313), ausgehend von einem mit dem Grundkörper (11, 111, 211, 311) verbundenen Ende, geneigt zu einem freien Ende verläuft und im Bereich des freien Endes radial innen zur Längsachse (13, 113, 213, 313) hin eine erste Dichtkontur (17, 117, 217, 317) und dazu axial vom freien Ende weg mindestens eine weitere Dichtkontur (18, 118, 218, 318) aufweist, wobei die Dichtkonturen (17, 117, 217, 317; 18, 118, 218, 318) zur Anlage an der Außenfläche (10) der Nabenhülse (4) bestimmt sind,
- einen - im Längsschnitt gesehen - zweiten Schenkel (16, 116, 216, 316), der axial entlang der Längsachse (13, 113, 213, 313) zum ersten Schenkel (15, 115, 215, 315) versetzt am Grundkörper (11, 111, 211, 311) mit seinem verbundenen Ende ansetzt und mit der gleichen Richtung geneigt verläuft wie der erste Schenkel (15, 115, 215, 315) und mit einem freien Ende endet, wobei der zweite Schenkel (16, 116, 216, 316) im Bereich seines freien Endes radial innen zur Längsachse (13, 113, 213, 313) hin ebenfalls wie der erste Schenkel (15, 115, 215, 315) eine erste Dichtkontur (19, 119, 219, 319) und jeweils axial entlang der Längsachse (13, 113, 213, 313) zu seinem verbundenen Ende versetzt mindestens eine weitere Dichtkontur (20, 120, 220, 320) aufweist, wobei diese Dichtkonturen (19, 119, 219, 319; 20, 120, 220, 320) zur Anlage an der Außenfläche (10) der Nabenhülse (4) bestimmt sind.

2. Dichtring nach Anspruch 1
**dadurch gekennzeichnet,**
**dass** die Länge des ersten Schenkels (15, 115, 215, 315) von dem mit dem Grundkörper (11,111, 211, 311) verbundenen Ende bis zum freien Ende größer bemessen ist, als die des zweiten Schenkels (16, 116, 216, 316) von seinem mit dem Grundkörper (11, 111, 211, 311) verbundenen Ende bis zu seinem freien Ende.

3. Dichtring nach Anspruch 1,
**dadurch gekennzeichnet,**
**dass** der erste Schenkel (15, 115, 215, 315) und/oder zweite Schenkel (16, 116, 216, 316) ausgehend jeweils vom freien Ende zum verbundenen Ende an einer Verdickung die weitere(-n) Dichtkontur(-en) (18, 118, 218, 318; 20, 120, 220, 320) tragen.

4. Dichtung nach Anspruch 1,
**dadurch gekennzeichnet,**
**dass** zwischen den Dichtkonturen (17, 18, 19, 20; 117, 118, 119, 120; 217, 218, 219, 220; 317, 318, 319, 320) eine jeweils von der Längsachse (13, 113, 213, 313) weggerichtete ringförmige Vertiefung (21, 121, 221, 321) angeordnet ist.

5. Dichtring nach einem der Ansprüche 1 bis 4,
**dadurch gekennzeichnet,**
**dass** mindestens eine der Dichtkonturen (17, 18, 19, 20; 117, 118, 119, 120; 317, 318, 319, 320) im entspannten Zustand als Ringkante ausgebildet ist.

6. Dichtring nach einem der Ansprüche 1 bis 4,
**dadurch gekennzeichnet,**
**dass** mindestens eine der Dichtkonturen (218, 220) im entspannten Zustand als Ringfläche ausgebildet ist.

7. Dichtring nach einem der Ansprüche 1 bis 4,
**dadurch gekennzeichnet,**
**dass** mindestens eine der Dichtkonturen (217, 219) im entspannten Zustand - im Längsschnitt gesehen - abgerundet ist.

8. Dichtring nach Anspruch 1,
**dadurch gekennzeichnet,**
**dass** der Grundkörper (11, 111, 211, 311) mit einem Verstärkungsring (22, 122, 222, 322) aus einem vom Material des Grundkörpers (11, 111, 211, 311) abweichenden Material unlösbar verbunden ist.

9. Dichtring nach Anspruch 8,
**dadurch gekennzeichnet,**
**dass** der Verstärkungsring (22, 122, 222, 322) zumindest teilweise in den Grundkörper (11, 111, 211, 311) eingebettet ist.

10. Dichtring nach einem der Ansprüche 8 oder 9,
**dadurch gekennzeichnet,**
**dass** der Verstärkungsring (22, 122, 222, 322) aus Metall besteht.

## Claims

1. A sealing ring (9, 109, 209, 309) for sealing a gap between an internally profiled hub sleeve (4) of a length compensation (3) of a universal joint shaft, having a circular cylindrical outer face (10), and a tubular sealing sleeve (7), covering externally the hub sleeve (4) and retaining the sealing ring (9, 109, 209, 309),
**characterised by**
- an annular base body (11, 111, 211, 311) made from an elastically deformable rubber material and/or plastic material, and to which means for retaining on the sealing sleeve (7) are arranged and having a longitudinal axis (13, 113, 213, 313) as well as an inner contour (14, 114, 214, 314),
- a first leg (15, 115, 215, 315) - seen in a longitudinal sectional view -, which in the relaxed condition, starting from an end connected to the base body (11, 111, 211, 311), extends inclined relative to the longitudinal axis (13, 113, 213, 313) to a free end and has in the area of the free end radially inwards towards the longitudinal axis (13, 113, 213, 313) a first sealing contour (17, 117, 217, 317) and axially distanced thereto, away from the free end, at least one further sealing contour (18, 118, 218, 318), wherein the sealing contours (17, 117, 217, 317; 18, 118, 218, 318) serve for the abutment on the outer face (10) of the hub sleeve (4),
- a second leg (16, 116, 216, 316) - seen in a longitudinal sectional view -, attached off-set axially along the longitudinal axis (13, 113, 213, 313) to the first leg (15, 115, 215, 314) on the base body (11, 111, 211, 311) with its connected end and which extends inclined in the same direction as the first leg (15, 115, 215, 315) and ends with a free end, wherein the second leg (16, 116, 216, 316) has in the area of its free end, radially inwards towards the longitudinal axis (13, 113, 213, 313) as well as the first leg (15, 115, 215, 315) a first sealing contour (19, 119, 219, 319) and, respectively, axially off-set along the longitudinal axis (13, 113, 213, 313) towards its connected end at least one further sealing contour (20, 120, 220, 320), wherein the sealing contours (19, 119, 219, 319; 20, 120, 220, 320) serve for the abutment on the outer face (10) of the hub sleeve (4).

2. Sealing ring according to claim 1,
**characterised in that**
the length of the first leg (15, 115, 215, 315) is dimensioned longer from the end connected to the base body (11, 111, 211, 311) to the free end, than the length of the second leg (16, 116, 216, 316) from its end connected to the base body (11, 111, 211, 311) to its free end.

3. Sealing ring according to claim 1,
**characterised in that**
the first leg (15, 115, 215, 315) and/or the second leg (16, 116, 216, 316), starting, respectively, from the free end to the connected end, support the further sealing contour(-s) (18, 118, 218, 318; 20, 120, 220, 320) on a thickening.

4. Sealing ring according to claim 1,
**characterised in that**
between the sealing contours (17, 18, 19, 20; 117, 118, 119, 120; 217, 218, 219, 220; 317, 318, 319, 320) an annular recess (21, 121, 221, 321), facing away, respectively, from the longitudinal axis (13, 113, 213, 313), is arranged.

5. Sealing ring according to one of claims 1 to 4,
**characterised in that**
at least one of the sealing contours (17, 18, 19, 20; 117, 118, 119, 120; 317, 318, 319, 320) is formed as an annular edge in the relaxed condition.

6. Sealing ring according to one of claims 1 to 4,
**characterised in that**
at least one of the sealing contours (218, 220) is formed as an annular face in the relaxed condition.

7. Sealing ring according to one of claims 1 to 4,
**characterised in that**
at least one of the sealing contours (217, 219) is formed rounded in the relaxed condition - when seen in a longitudinal sectional view-.

8. Sealing ring according to claim 1,
**characterised in that**
the base body (11, 111, 211, 311) is connected non-detachably to a reinforcement ring (22, 122, 222, 322) made from a material deviating from the material of the base body (11, 111, 211, 311).

9. Sealing ring according to claim 8,
**characterised in that**
the reinforcement ring (22, 122, 222, 322) is at least partially embedded in the base body (11, 111, 211, 311).

10. Sealing ring according to one of claims 8 or 9,
**characterised in that**
the reinforcement ring (22, 122, 222, 322) is made from metal.

## Revendications

1. Anneau d'étanchéité (9, 109, 209, 309) pour étancher l'intervalle entre une douille de moyeu (4), profilée à l'intérieur et présentant une surface extérieure cylindrique circulaire (10), d'un dispositif de compensation de longueur (3) d'un arbre articulé et une douille d'étanchéité tubulaire (7) recouvrant à l'extérieur la douille de moyeu (4) et retenant l'anneau d'étanchéité (9, 109, 209, 309),
**caractérisé par**
- un corps de base annulaire (11, 111, 211, 311) en matériau caoutchouteux et/ou en matière plastique élastiquement déformable, auquel sont associés des moyens pour l'immobilisation sur la douille d'étanchéité (7) et qui comprend un axe longitudinal (13, 113, 213, 313) ainsi qu'un contour intérieur (14, 114, 214, 314),
- une première branche (15, 115, 215, 315), vue en coupe longitudinale, qui s'étend à partir d'une extrémité reliée au corps de base (11, 111, 211, 311) en oblique vers une extrémité libre, dans l'état détendu vers l'axe longitudinal (13, 113, 213, 313), et qui comprend dans la zone de l'extrémité libre radialement vers l'intérieur en direction de l'axe longitudinal (13, 113, 213, 313) un premier contour d'étanchéité (17, 117, 217, 317) et axialement en éloignement de l'extrémité libre au moins un autre contour d'étanchéité (18, 118, 218, 318), les contours d'étanchéité (17, 117, 217, 317 ; 18, 118, 218, 318) étant destinés à venir en appui contre la surface extérieure (10) de la douille de moyeu (4),
- une deuxième branche (16, 116, 216, 316), vue en coupe longitudinale, qui est rapportée par son extrémité liée sur le corps de base (11, 111, 211, 311) en décalage par rapport à la première branche (15, 115, 215, 315) axialement le long de l'axe longitudinal (13, 113, 2313, 313) et qui s'étend en étant inclinée dans la même direction que la première branche (15, 115, 215, 315) et qui se termine par une extrémité libre, la deuxième branche (16, 116, 216, 316) comprenant, tout comme la première branche (15, 115, 215, 315), dans la zone de son extrémité libre radialement vers l'intérieur en direction de l'axe longitudinal (13, 113, 213, 313) un premier contour d'étanchéité (19, 119, 219, 319) et axialement le long de l'axe longitudinal (13, 113, 213, 313), en décalage par rapport à son extrémité liée, au moins un autre contour d'étanchéité (20, 120, 220, 320), ces contours d'étanchéité (19, 119, 219, 319 ; 20, 120, 220, 320) étant destinés à venir en appui contre la surface extérieure (10) de la douille de moyeu (4).

2. Anneau d'étanchéité selon la revendication 1, **caractérisé en ce que** la longueur de la première branche (15, 115, 215, 315) allant de l'extrémité reliée au corps de base (11, 111, 211, 311) jusqu'à l'extrémité libre est dimensionnée plus longue que celle de la deuxième branche (16, 116, 216, 316) allant de son extrémité reliée au corps de base (11, 111, 211, 311) jusqu'à son extrémité libre.

3. Anneau d'étanchéité selon la revendication 1, **caractérisé en ce que** la première branche (15, 115, 215, 315) et/ou la deuxième branche (16, 116, 216, 316) porte(nt) le ou les autres contours d'étanchéité (18, 118, 218, 318 ; 20, 120, 220, 320) sur un épaississement, à partir de l'extrémité libre respective vers l'extrémité liée.

4. Anneau d'étanchéité selon la revendication 1, **caractérisé en ce qu'**il est prévu, entre les contours d'étanchéité (17, 18, 19, 20 ; 117, 118, 119, 120 ; 217, 218, 219, 220 ; 317, 318, 319, 320), un renfoncement annulaire respectif (21, 121, 221, 321) dirigé en éloignement de l'axe longitudinal (13, 113, 213, 313).

5. Anneau d'étanchéité selon l'une des revendications 1 à 4, **caractérisé en ce que** l'un au moins des contours d'étanchéité (17, 18, 19, 20 ; 117, 118, 119, 120 ; 317, 318, 319, 320) est réalisé sous forme d'arête annulaire dans l'état détendu.

6. Anneau d'étanchéité selon l'une des revendications 1 à 4, **caractérisé en ce que** l'un au moins des contours d'étanchéité (218, 220) est réalisé sous forme de surface annulaire dans l'état détendu.

7. Anneau d'étanchéité selon l'une des revendications 1 à 4, **caractérisé en ce que** l'un au moins des contours d'étanchéité (217, 219) est arrondi, vu en coupe longitudinale, dans l'état détendu.

8. Anneau d'étanchéité selon la revendication 1, **caractérisé en ce que** le corps de base (11, 111, 211, 311) est relié de façon non détachable à un anneau de renforcement (22, 122, 222, 322) en un matériau qui diffère du matériau du corps de base (11, 111, 211, 311).

9. Anneau d'étanchéité selon la revendication 8, **caractérisé en ce que** l'anneau de renforcement (22, 122, 222, 322) est noyé au moins partiellement dans le corps de base (11, 111, 211, 311).

10. Anneau d'étanchéité selon l'une ou l'autre des revendications 8 et 9, **caractérisé en ce que** l'anneau de renforcement (22, 122, 222, 322) est constitué en métal.
